# EUROPÄISCHE PATENTSCHRIFT

(11) **EP 0 358 003 B1**
(45) Veröffentlichungstag und Bekanntmachung des Hinweises auf die Patenterteilung: **21.07.1993**
(21) Anmeldenummer: 89115055.9
(22) Anmeldetag: 16.08.1989
(51) Int. Cl.: G01B 5/20, G01B 7/28

(54) **Anordnung zur Diagnose der Abmessungen einer Kfz-Karosserie**
Arrangement to determine the dimensions of the coachwork of a motor vehicle
Dispositif pour déterminer les dimensions de la carrosserie d'une automobile

(30) Priorität: 25.08.1988 DE 3828838
(43) Veröffentlichungstag der Anmeldung: 14.03.1990
(73) Patentinhaber: CELETTE GMBH, D-77694 Kehl (DE)
(72) Erfinder: Speisser, Alfred, D-7640 Kehl-Sundheim (DE)
(74) Vertreter: Zipse + Habersack

(56) Entgegenhaltungen:
- WO-A-88/04404
- DE-A- 3 121 579
- GB-A- 1 391 328
- GB-A- 2 075 185

## Beschreibung

Die Erfindung betrifft eine Vorrichtung zur Diagnose der Abmessungen sowie zum Richten einer beschädigten Kraftfahrzeugkarosserie gemäß dem Oberbegriff des Anspruchs 1.

Die Erfindung geht aus von einer Vorrichtung zum Richten und Wiederherstellen beschädigter Karosserien von Kraftfahrzeugen, bei denen auf einer Richtbank, bestehend aus einem aus mehreren Profilen zusammengesetzten Rahmen mit an der Oberseite vorgesehenen Löchern, von vorne nach hinten mehrere Elemente eines Richtwinkelsatzes in Abständen eines Rastermaßes mittels Schrauben befestigt sind. Eine derartige Vorrichtung ist beispielsweise in der DE-U-87 08 639.5 beschrieben, wo auf dem Rahmen der Richtbank die Elemente des Richtwinkelsatzes angeordnet sind, die beispielsweise von der Frontverkleidung und der Befestigung der vorderen Stoßstangen bis zur Befestigung der hinteren Stoßdämpfer und der hinteren Stoßstange reichen.

Die genannten Vorrichtungen wurden für die verschiedensten Typen von Kraftfahrzeugen bzw. deren Karosserien bekannt, wobei die einzelnen Teile der Richtwinkelsätze aus mechanischen Teilen bestehen, die auf Säulen angeordnet sind, die in am Rahmen befestigten Führungsträgern längsverschieb- und mittels Steckern festlegbar sind.

Vor dem Richten und Wiederherstellen beschädigter Karosserien von Kraftfahrzeugen tritt das Problem auf, an der Fahrzeugkarosserie vorab eine rasche und sichere Diagnose auf mögliche Beschädigungen durchzuführen und das Ergebnis zu dokumentieren, wobei insbesondere festgestellt werden soll, ob die Dimensionen einer beschädigten Karosserie an bestimmten markanten Punkten von denjenigen einer unbeschädigten Karosserie abweichen oder nicht.

Der vorliegenden Erfindung liegt daher die Aufgabe zugrunde, in die vorbekannte Vorrichtung zum Richten beschädigter Kraftfahrzeugkarosserie ein elektrisches oder elektronisches Diagnosesystem zu integrieren, mit dem es möglich ist, eine möglichst rasche und sichere "JA/NEIN-Aussage zu machen, ob die Werte der markanten Punkte der beschädigten Karosserie denjenigen einer unbeschädigten Karosserie entsprechen oder nicht. Dies ist vor allem deshalb besonders wesentlich, weil bei unfallgeschädigten Fahrzeugkarosserien nicht immer sofort erkennbar ist, ob ihre Dimensionen verändert oder die Karosserie sonstwie beschädigt ist.

Aus der GB-A-1 391 328 ist eine Vorrichtung zur Überprüfung der Dimensionen von Fahrzeugkarosserien bei ihrer Herstellung auf vorhandene Toleranzen beschrieben, wobei mit der Vorrichtung drei Zustände angegeben werden können, die sich auf größere und geringere Toleranzwerte und den Normalwert beziehen. Die dabei verwendeten elektrischen Kontakte erkennen drei Zustände, die angezeigt werden. Bei einer fertig zusammengeschweißten Karosserie wird davon ausgegangen, daß alle Werte grob eingehalten sind, daß es aber Unterschiede in den Toleranzen sowohl in positiver als auch in negativer Hinsicht gibt.

Demgegenüber geht die vorliegende Erfindung davon aus, eine Diagnose der Karosserie eines bereits betriebsfertig zusammengebauten Kraftfahrzeuges durchzuführen, um auf schnelle Weise eine Veränderung der Karosseriedimensionen, beispielsweise infolge eines Unfalls, zu erkennen und zu dokumentieren.

Zur Lösung der gestellten Aufgabe wird daher vorgeschlagen, bei einer Vorrichtung der eingangs genannten Art die kennzeichnenden Merkmale des Anspruchs 1 vorzusehen.

Durch die Vorrichtung gemäß der Erfindung wird der wesentliche Vorteil erreicht, daß die von den elektrischen Kontakten oder elektronischen Sensoren gelieferten Signale als einfache JA/NEIN-Signale über ein geeignetes Interface dem Eingang des Computers zugeführt werden können. Im Speicher des Computers sind dann die Daten der XYZ-Werte der markanten Punkte einer unbeschädigten Karosserie entsprechend dem Typ des Kraftfahrzeuges eingegeben. Der Computer wird durch ein Programm gesteuert, das einen Soll/Ist-Vergleich zwischen den Daten der eingegebenen und der von den Kontakten oder Sensoren gelieferten Werte durchführt. Das Ergebnis kann dann in einem Peripheriegerät, z. B. einem Bildschirm, angezeigt oder durch einen Drucker ausgedruckt werden. Damit liegt eine schriftliche Bestätigung des Diagnoseergebnisses sofort vor und kann weiterverwendet werden.

Eine weitere, abgewandelte Ausführungsform der Anwendung kann gemäß Anspruch 2 darin bestehen, daß an den Säulen Löcher zum Einstecken eines Steckers vorgesehen sind, der durch Löcher in Hohlträgern über welche die Säulen mit den Profilstücken verbunden sind, gesteckt werden kann, wobei im Bereich des Steckers weitere elektrische Kontakte oder elektronische Sensoren vorgesehen sind, die durch weitere Überprüfungssignale die Lage der Endpunkte elektrisch, elektronisch oder mechanisch durch Einstecken des Steckers in die genannten Löcher in ihren richtigen Maßen bestätigen.

Damit ist es möglich, mit einem zweiten Überprüfungssignal elektrisch oder elektronisch durch den Stecker die Lage der Endpunkte mit ihren richtigen Maßen zu bestätigen. Dies ist deshalb besonders vorteilhaft, da bei jedem Hohlträger der durch die darin vorgesehenen Öffnungen und durch die Öffnungen der Säulen hindurchgesteckte Stecker zur Kontrolle benutzt wird.

Anhand der Zeichnungen soll die Anwendung der Diagnoseanordnung gemäß der Erfindung näher erläutert werden.

In den Zeichnungen zeigt
- Fig. 1: eine prinzipielle, perspektivische Darstellung einer Richtbank mit darauf angeordneten Richtwinkelsätzen und den auf den Elementen dargestellten elektrischen Kontakten bzw. elektronischen Sensoren, die mit einer Computeranordnung verbunden sind, zur Anwendung der Diagnoseanordnung.
- Fig. 2: zeigt eine Detaildarstellung der Anordnung der elektrischen Kontakte bzw. elektronischen Sensoren an dem mit dem Rahmen verbundenen, hohlen Führungsträger.

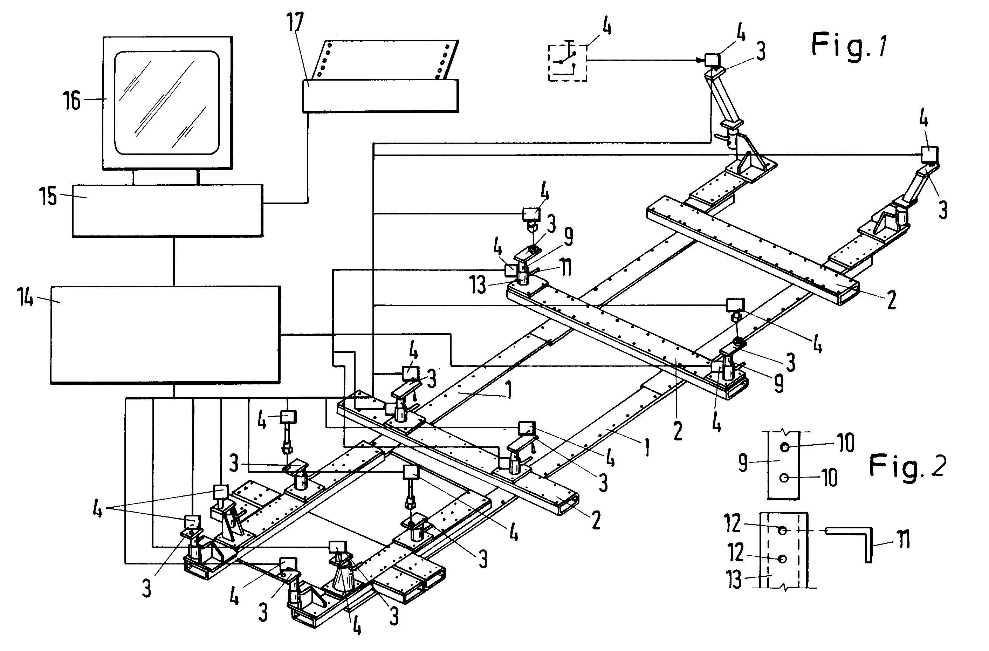

Wie sich aus Fig. 1 ergibt, besteht der Rahmen der Richtbank aus längsverlaufenden Profilschienen 1 und querverlaufenden Profilstücken 2, die an der Oberseite mit Löchern versehen sind.

Auf dem Rahmen sind von vorne nach hinten mehrere Elemente 3 eines Richtwinkelsatzes auf Säulen 9 befestigt, die in Hohlträgern 13 längsverschieb- und mittels Steckern 11, die durch Bohrungen 12 in den Hohlträgern 13 und Bohrungen 10 in den Säulen 9 festlegbar sind. Die Elemente 3 des Richtwinkelsatzes können somit im Maßabstand des angegebenen Rastermaßes auf den Profilschienen 1 und den Profilstücken 2 angeordnet werden. Die Elemente 3 bestehen aus mechanischen Teilen, deren Formgebung den zu kontrollierenden Punkten der jeweiligen Karosserie angepaßt ist. An den Enden der Elemente 3 sind elektrische Kontakte 4 oder elektronische Sensoren angeordnet. Die elektrischen Kontakte 4 oder elektronischen Sensoren sind über Leitungen mit einem Interface 14 verbunden. Das Interface 14 ist mit dem Eingang eines Computers 15 verbunden, in dessen Speicher die Daten der XYZ-Werte der zu kontrollierenden Punkte einer unbeschädigten Karosserie des entsprechenden Kraftfahrzeugtyps eingegeben sind.

Der Computer wird durch ein entsprechendes Programm zur Durchführung eines Ist/Soll-Vergleichs zwischen den eingegebenen Daten, die den markanten Punkten einer unbeschädigten Karosserie entsprechen, und den von den Kontakten oder Sensoren gelieferten Werten gesteuert.

Wenn auf den aus den Profilschienen 1 und den querverlaufenden Profilstücken 2 aufgebauten Rahmen die Kraftfahrzeugkarosserie bzw. das Kraftfahrzeug aufgesetzt wird, deren zu kontrollierenden Punkte der Norm entsprechen, d. h. wenn es sich um eine nicht beschädigte Karosserie handelt, wird das Ergebnis dieses Vergleichs auf einem an den Computer angeschlossenen Bildschirm angezeigt oder durch einen Drucker ausgedruckt. Weichen ein oder mehrere zu kontrollierenden Punkte von der Norm einer unbeschädigten Karosserie ab, so wird das Ergebnis dieses Vergleichs ebenfalls auf dem Bildschirm 16 angezeigt oder durch einen Drucker 17 ausgedruckt. Auf diese Weise ist es möglich, in relativ kurzer Zeit eine vollständige Diagnose der zu kontrollierenden Punkte der Fahrzeugkarosserie durchzuführen und das Ergebnis zu dokumentieren.

Wie in Fig. 2 dargestellt, sind in den Säulen 9, die an der Oberseite mit den nicht dargestellten Elementen 3 verbunden sind, Löcher 10 vorgesehen. In den Hohlträgern 13 sind Löcher 12 mit entsprechenden Dimensionen und mit entsprechendem Abstand vorgesehen. Nach dem Einsetzen der Säule 9 in die Hohlträger 13 kann durch die Löcher 12, 10 ein Stecker 11 gesteckt werden, wobei zur Bestätigung des zweiten Überprüfungssignals im Bereich dieses Steckes 11 weitere elektrisch Kontakte oder elektronische Sensoren vorgesehen sind, die beim Einstecken des Steckers 11 betätigt worden. Diese können durch weitere Überprüfungssignale die Lage der Endpunkte elektrisch, elektronisch oder mechanisch durch Einstecken des Steckers 11 in die Löcher 10, 12 in ihren richtigen Maßen bestätigen.

Die elektrischen Kontake 4 können aus normalen Berührungskontakten bestehen. Es ist aber auch möglich, beliebige elektronische Sensoren, beispielsweise magnetische, elektrostatische oder elektrooptische Sensoren, vorzusehen, die in analoger Weise mit dem Interface 14 über die Leitungen verbunden sind.

## Patentansprüche

1. Vorrichtung zur Diagnose der Abmessungen sowie zum Richten einer beschädigten Kraftfahrzeugkarosserie, mit einer Richtbank, die aus einem aus Profilstücken (1,2) aufgebauten Rahmen besteht, auf dem Säulen (9) angebracht sind, an denen Elemente (3) eines Richtwinkelsatzes befestigt sind, wobei die Elemente (3) des Richtwinkelsatzes aus mechanischen Teilen bestehende Endstücke sind, deren Formgebung markanten Punkten einer unbeschädigten Karosserie des jeweiligen Fahrzeugtyps im ein- oder ausgebauten Zustand angepaßt ist, dadurch gekennzeichnet, daß an den jeweiligen Enden der Elemente (3) des Richtwinkelsatzes elektrische Kontakte (4) oder elektronische Sensoren angeordnet sind, mit denen bei aufgesetzter Fahrzeugkarosserie Ja/Nein-Signale auslösbar sind, je nachdem, ob die XYZ-Koordinaten des zu vermessenden Punktes der beschädigten Karosserie denjenigen einer unbeschädigten Karosserie entsprechen oder nicht, und daß die elektrischen Kontakte (4) oder elektronischen Sensoren über ein Interface (14) mit dem Eingang eines Computers (15) elektrisch verbunden sind, in dessen Speicher Daten eingegeben worden sind, die den XYZ-Koordinaten der markanten Punkte einer unbeschädigten Karosserie entsprechen, wobei mit dem Computer (15) ein Soll/Ist-Vergleich zwischen den in den Speicher eingegebenen Daten und den von den elektrischen Kontakten (4) oder elektronischen Sensoren gelieferten Werten durchführbar ist, und wobei der Computer (15) mit einem Peripheriegerät wie einem Bildschirm (16) oder einem Drucker (17) zum Ausgeben des Ergebnisses dieses Vergleichs verbunden ist.

2. Vorrichtung nach Anspruch 1, dadurch gekennzeichnet, daß die Säulen (9) über Hohlträger (13) mit den Profilstücken (1,2) verbunden sind, wobei sowohl die Säulen (9), als auch die Hohlträger (13) Löcher (10,12) zum Einstecken eines Steckers (11) aufweisen, und wobei im Bereich des Steckers weitere elektrische Kontakte oder elektronische Sensoren angeordnet sind, die beim Einstecken des Steckers (11) betätigt werden und deren Ausgangssignale zur Überprüfung der Lage der mit den Säulen verbundenen Elemente (3) des Richtwinkelsatzes verwendbar sind.

## Claims

1. Arrangement to determine the dimensions and to repair a damaged coachwork of a motor vehicle, with a straightening bench, which consists of a framework constructed from profile parts (1,2), on which columns (9) are secured, on which elements (3) of an angle straightening device are mounted, wherein the elements (3) of the angle straightening device are end pieces consisting of mechanical parts, the design of which conforms to prominent points of an undamaged coachwork of the respective type of motor vehicle in the assembled or dismantled state, characterised in that electric contacts (4) or electronic sensors are arranged at the respective ends of the elements (3) of the angle straightening device, with which yes/no signals may be released for a coachwork of a motor vehicle which has been placed upon it, depending on whether the XYZ coordinates of the point of the damaged coachwork to be measured correspond to those of an undamaged coachwork or not, and that the electric contacts (4) or electronic sensors are electrically connected via an interface (14) to the input of a computer (15), in the memory of which data is entered which corresponds to the XYZ coordinates of the prominent points of an undamaged coachwork, whereby a comparison of the required/actual values of the data entered into the memory and the values supplied by the electric contacts (4) or electronic sensors may be carried out, and wherein the computer (15) is connected to a peripheral such as a screen (16) or a printer (17) to display the result of this comparison.

2. Arrangement according to claim 1, characterised in that the columns (9) are connected to the profile parts (1,2) by hollow supports (13), wherein both the columns (9) and the hollow supports (13) have holes (10,12) for the insertion of a pin (11), and wherein in the region of the pin additional electric contacts or electronic sensors are arranged, which are activated on insertion of the pin and the output signals of which may be used to check the position of the elements (3) of the angle straightening device which are connected to the columns.

## Revendications

1. Dispositif pour déterminer les dimensions ainsi que pour dresser une carrosserie de véhicule automobile endommagée, avec un banc à dresser, composé d'un cadre construit en éléments de profilés (1,2), sur lequel sont montées des colonnes (9), sur lesquelles sont fixés des éléments (3) d'un jeu d'équerres, les éléments (3) du jeu d'équerre étant des pièces d'extrémité composées de parties mécaniques, dont la configuration est adaptée aux points marquants d'une carrosserie non endommagée du type de véhicule spécifique, entièrement équipéé ou dénudée, caractérisé en ce qu'aux extrémités respectives des éléments (3) du jeu d'équerres sont disposés des contacts électriques (4) ou des capteurs électroniques, à l'aide desquels, lorsque la carrosserie de véhicule est installée, sont produits des signaux oui/non, selon que les coordonnés en XYZ du point à mesurer de la carrosserie endommagée correspondent ou non à ceux d'une carrosserie non endommagée, et en ce que les contacts électriques (4) ou les capteurs électroniques sont reliés électriquement, par l'intermédiaire d'une interface (14) à l'entrée d'un ordinateur (15), dans la mémoire duquel ont été introduites des données correspondant aux coordonnées en XYZ des points marquants d'une carrosserie non endommagée, une comparaison valeur de consigne/valeur réelle pouvant être opérée entre les données introduites dans l'ordinateur et les valeur fournies par les contact électriques (4) ou les capteurs électroniques, et où l'ordinateur (15) est reliée à un appareil périphérique, tel qu'un écran (16) ou une imprimante (17), en vue de délivrer le résultat de cette comparaison.

2. Dispositif selon la revendication 1, caractérisé en ce que les colonnes (9) sont reliées aux éléments de profilés (1,2) par l'intermédiaire de poteaux creux (13), tant les colonnes (9) que les poteaux creux (13) présentant des trous (10,12), pour enfiler une fiche (11), d'autres contacts électriques ou capteurs électroniques étant disposés dans la zone de la fiche et actionnés lors de l'enfilage de la fiche (11) et leurs signaux de sortie étant utilisables pour contrôler la position des éléments (3), reliés aux colonnes, du jeu d'équerres.
